(19) Europäisches Patentamt
European Patent Office
Office européen des brevets

(11) EP 2 184 311 B1

(12) # EUROPÄISCHE PATENTSCHRIFT

(45) Veröffentlichungstag und Bekanntmachung des Hinweises auf die Patenterteilung:
**25.01.2012 Patentblatt 2012/04**

(51) Int Cl.:
***C08J 5/18*** *(2006.01)* ***C08K 5/1515*** *(2006.01)*

(21) Anmeldenummer: **09013791.0**

(22) Anmeldetag: **03.11.2009**

(54) **Biaxial orientierte hydrolysebeständige Polyesterfolie enthaltend epoxidierte Fettsäurederivate und einen Kettenverlängerer sowie Verfahren zu ihrer Herstellung und ihre Verwendung**

Biaxially oriented epoxidised fatty acid derivatives containing hydrolysis resistant polyester film and a chain extender and method for production of same and use of same

Feuille de polyester résistante à l'hydrolyse orientée de manière bi-axiale contenant des dérivés d'acide gras époxydes et un prolongateur de chaîne, ainsi que son procédé de fabrication et d'utilisation

(84) Benannte Vertragsstaaten:
**DE ES FR GB IT LU TR**

(30) Priorität: **11.11.2008 DE 102008056692**

(43) Veröffentlichungstag der Anmeldung:
**12.05.2010 Patentblatt 2010/19**

(73) Patentinhaber: **Mitsubishi Polyester Film GmbH**
**65203 Wiesbaden (DE)**

(72) Erfinder:
- **Kliesch, Holger**
  **65462 Ginsheim (DE)**
- **Kuhmann, Bodo**
  **65594 Runkel (DE)**
- **Hackl, Thomas**
  **65510 Hünstetten (DE)**
- **Klein, Dagmar**
  **55427 Ockenheim (DE)**
- **Fischer, Ingo**
  **65558 Heistenbach (DE)**
- **Bursch, Annegrete**
  **65385 Rüdesheim (DE)**

(74) Vertreter: **Schweitzer, Klaus et al**
**Plate Schweitzer Zounek**
**Patentanwälte**
**Rheingaustrasse 196**
**65203 Wiesbaden (DE)**

(56) Entgegenhaltungen:
**EP-A- 1 054 031** **EP-A- 1 842 662**
**WO-A-2004/069912**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 184 311 B1

Printed by Jouve, 75001 PARIS (FR)

## Beschreibung

Die Erfindung betrifft eine biaxial gestreckte hydrolysebeständige Folie aus einem Polyester, deren Dicke bevorzugt im Bereich von 11 bis 500 μm liegt. Die Folie enthält mindestens ein Hydrolyseschutzmittel und einen Kettenverlängerer und zeichnet sich durch ihre geringe Hydrolysegeschwindigkeit aus. Die Erfindung betrifft ferner ein Verfahren zur Herstellung der Folie sowie ihre Verwendung.

Folien aus Polyestern im angegebenen Dickenbereich sind hinreichend bekannt. Nachteilig an solchen Polyesterfolien ist jedoch ihre Hydrolyseneigung, insbesondere bei Temperaturen oberhalb der Glastemperatur des jeweiligen Polyesters. Unter Hydrolyseneigung wird hierbei die Eigenschaft des Polyesters verstanden, unter feuchten Bedingungen hydrolytisch abzubauen, welches beispielsweise an einer Reduzierung des IV- bzw. SV-Wertes erkennbar ist. Dies ist insbesondere bei Anwendungen mit höherer Temperaturbeanspruchung wie in Folienkondensatoren, Kabelummantelungen, Flachbandkabeln, Motorschutzfolien, aber auch in Langzeitanwendungen wie in Verglasungen und Außenanwendungen und insbesondere im Rückseitenlaminat von Solarmodulen ein limitierender Faktor für die Anwendung von Polyesterfolien.

Besonders ausgeprägt ist die Hydrolyseneigung bei aliphatischen Polyestern, aber auch bei aromatischen Polyestern wie Polybutylenterephthalat (PBT) und Polyethylenterephthalat (PET). Wenn die Hydrolyseneigung von PET zu groß für die Anwendung wird, muss man auf das hydrolysestabilere Polyethylennaphthalat (PEN) zurückgreifen oder sogar auf andere Polymere wie z. B. Polyetherimide oder Polyimide. Diese sind jedoch deutlich teurer als PET und deshalb häufig aus wirtschaftlichen Gründen keine Lösung.

Es wurde deshalb bereits vorgeschlagen, die Hydrolysestabilität von Polyesterfolien durch die Einarbeitung von Hydrolysestabilisatoren zu verbessern.

Hydrolysebeständigere Polyesterrohstoffe, die durch Verwendung von Carbodiimiden erhalten werden, sowie daraus hergestellte Fasern und Folien sind bekannt (US-A-5,885,709, EP-A-0 838 500, CH-A-621 135). Folien, die aus solchen Rohstoffen hergestellt werden, neigen jedoch sowohl in der Herstellung als auch in der späteren Verwendung zu Ausgasungen von Isocyanaten und anderen schleimhautreizenden bzw. gesundheitsschädlichen Neben- und Abbauprodukten. Dies ist bei flächigen Gebilden wie Folien mit großer Oberfläche ein weit größeres Problem als z. B. bei Spritzgussteilen.

Hydrolysestabilisatoren auf Basis von terminalen Epoxygruppen können ebenfalls zu einer Hydrolysestabilisierung führen und sind beispielsweise in der EP-A-0 292 251 oder US-A-3,657,191 beschrieben. Häufig ist die Einbindung solcher Verbindungen in die Polyestermatrix ungenügend, was bei verstreckten Polyesterfolien zu Abrissen im Produktionsprozess führt. Infolge der schlechten Einbindung reagiert zudem nur ein Teil der Epoxyfunktionen mit dem Polyester, der Rest reagiert mit sich selbst und führt zu einer Vergelung des eingesetzten Materials. Die Reaktivität solcher Epoxidfunktionen mit Polyestern und mit sich selbst ist in der Extrusion sehr hoch, so dass die Hydrolysestabilisierung hier im wesentlichen auf einer initialen Molekulargewichtsanhebung basiert (d. h. die Folien besitzen von Anfang an einen höheren IV- bzw. SV-Wert und brauchen deshalb etwas länger, um diesen hydrolytisch abzubauen, als gleiche Folien mit einem initial niedrigeren IV/SV-Wert), mit einem Sekundäreffekt über eine Reduktion der Carboxylendgruppen. Eine echte Stabilisierung über einen im Endprodukt noch aktiven Stabilisator, welcher in der Lebenszeit des Endproduktes weiterhin aktiv einen Hydrolyseschutz bietet, kann über diesen Weg eher nicht erreicht werden. Es handelt sich hierbei also eher um eine Kettenverlängerung und nicht um einen echten Hydrolyseschutz.

Außerdem haben bekannte Hydrolysestabilisatoren wie Carbodiimide und andere Substanzen, wie die in der EP-A-0 292 251 beschriebenen, den Nachteil, dass sie aufgrund ihrer kettenverlängernden Wirkung teilweise zu starken, abrupten Molekulargewichtszunahmen (Viskositätsanstieg) im Polymer während der Extrusion führen und so den Extrusionsprozess instabil und schwer beherrschbar machen.

Des weiteren sind Polyesterfolien mit epoxidierten Pflanzenölen als Stabilisator in EP-A-1 634 914 und EP-A-1 842 871 beschrieben. Hier treten die für Carbodiimide typischen toxischen Abbauprodukte nicht auf, die Einbindung in die Polyestermatrix ist bei geeigneter Auswahl der Öle gut, und es kommt zu einer guten Hydrolysestabilisierung der Folien. Als Nachteile treten aber bei der Anwendung in der Produktion Viskositätsschwankungen, insbesondere zu niedrigeren Viskositäten hin, auf. Diese Viskositätsreduktion macht sich besonders bei der Extrusion in der Schmelze bemerkbar und führt zu schwankenden Drücken. Diese führen zu Dickenschwankungen der extrudierten Vorfolie und in der Folge zu Abrissen in der Produktion.

Eine Erhöhung der Viskosität, insbesondere während der Extrusion, könnte durch den Einsatz von Kettenverlängerern erreicht werden.

Kettenverlängerer für Polyester sind ebenfalls bekannt und z. B. in EP-A-1 054 031 beschrieben. Diese Druckschrift beschreibt die Verwendung von Anhydriden, insbesondere Pyromellitsäureanhydrid als wirksamen Bestandteil der erfindungsgemäßen Rezeptur.

Kettenverlängerer für PET, die auf Oxazolinen oder Caprolactamen beruhen, werden von DSM (Niederlande) unter dem Markennamen Allinco® vertrieben.

Kettenverlängerer mit Epoxidfunktionen werden u. a. in US-A-6,984,694 beschrieben und sind kommerziell

unter dem Markennahmen Joncryl® von BASF (Deutschland) erhältlich.

Polymere mit Glycidylendgruppen, die sich ebenfalls prinzipiell als Kettenverlängerer für PET eignen, werden unter den Markennamen Epon® von Hexion (USA) oder Lotader® von Arkema (Frankreich) vertrieben.

Obwohl wie oben beschrieben gut bekannt haben Kettenverlängerer in der industriellen Praxis bei der Herstellung von Polyesterfolien bisher keine nennenswerte Anwendung gefunden.

Aufgabe der vorliegenden Erfindung ist es, eine hydrolysebeständige Polyesterfolie zur Verfügung zu stellen, die die beschriebenen Nachteile des Standes der Technik vermeidet. Es soll ein stabiles und hohes Viskositätsniveau erreicht werden, ohne dass im nennenswerten Umfange Gele auftreten. Die Folie soll sich dabei wirtschaftlich herstellen lassen. Die Viskosität in der Extrusion soll möglichst wenig schwanken (auch nicht nach oben) und insbesondere die Frequenz der Ausschläge der Viskosität in der Extrusion nach unten, in deren Folge Folienabrisse auftreten, sollte < 4 am Tag betragen. Die Hydrolysestabilität der Folie soll durch die Maßnahmen zur Viskositätsstabilisierung wenig oder idealerweise gar nicht beeinträchtigt werden.

Diese Aufgabe wird gelöst durch eine Polyesterfolie, welche neben Polyester 0,25 - 20 Gew.-% (bezogen auf das Gewicht der Folie) eines Hydrolysestabilisators auf Basis von epoxidierten Fettsäureestern und/oder epoxidierten Fettsäureglyceriden enthält. Weiterhin enthält die Folie einen Kettenverlängerer.

Die Folie enthält als Hauptbestandteil einen Polyester. Geeignete Polyester sind beispielsweise Polyethylenterephthalat (PET), Polyethylennaphthalat (PEN), Polybutylenterephthalat (PBT), Polytrimethylenterephthalat (PTT), bibenzolmodifiziertes Polyethylenterephthalat (PETBB), bibenzolmodifiziertes Polybutylenterephthalat (PBTBB), bibenzolmodifiziertes Polyethylennaphthalat (PENBB) oder Mischungen daraus, wobei PET, PBT, PEN und PTT sowie deren Mischungen und Co-Polyester bevorzugt sind.

Zur Herstellung der Polyester können neben den Hauptmonomeren wie Dimethylterephthalat (DMT), Ethylenglycol (EG), Propylenglycol (PG), 1,4-Butandiol, Terephthalsäure (TA), Benzoldicarbonsäure und/oder 2,6-Naphthalindicarbonsäure (NDA) auch Isophthalsäure (IPA), trans- und/oder cis-1,4-Cyclohexandimethanol (c-CHDM, t-CHDM oder c/t-CHDM), Neopentylglykol und andere geeignete Dicarbonsäurekomponenten (oder Dicarbonsäureester) und Diolkomponenten verwendet werden.

Bevorzugt sind Polyester, bei denen die Dicarbonsäurekomponente zu 90 Gew.-% (bezogen auf die Gesamtmenge der Dicarbonsäurekomponente) und mehr, insbesondere zu 95 Gew.-% und mehr, aus Terephthalsäure (TA) besteht. Bevorzugt sind weiterhin Polyester, bei denen die Diolkomponente zu 90 Gew.-% und mehr, insbesondere zu 93 Gew.-% (bezogen auf die Gesamtmenge der Diole) und mehr, aus Ethylenglycol (EG) besteht. Bevorzugt sind auch Polymere, bei denen der Diethylenglycolanteil (DEG) am Gesamtpolymer im Bereich von 0,25 bis 3 Gew.-% liegt. Besonders bevorzugt ist dabei ein DEG-Gehalt von 0,75 - 1,5 Gew.-%, da in diesen Grenzen die stabilste Laufsicherheit erzielt wird, bei gleichzeitig bester Hydrolysestabilität . Bei allen in diesem Absatz genannten Mengenangaben bleibt das Hydrolyseschutzmittel und der Kettenverlängerer unberücksichtigt.

Der Carboxylendgruppengehalt der eingesetzten Polyester liegt dabei üblicherweise bei > 3 mmol/kg und besonders bevorzugt bei > 10 mmol/kg und idealerweise bei >15 mmol/kg. Je höher der Carboxylendgruppengehalt, desto größer ist der erreichbare Viskositätsanstieg durch die bevorzugten Kettenverlängerer. Besonders effektiv können die Kettenverlängerer wirken, wenn mindestens ein Polyester zu mindestens 5 Gew.-% (bezogen auf das Gesamtgewicht der Folie) eingesetzt wird, dessen Carboxylendgruppengehalt größer ist als 30 mmol/kg. Der Carboxylendgruppengehalt wird nach bekannten Verfahren mittels Titration bestimmt.

Die Folie gemäß der Erfindung kann weiterhin anorganische oder organische Partikel, die zur Einstellung der Oberflächentopographie oder Optik (Glanz, Trübung usw.) benötigt werden, enthalten. Solche Partikel sind z. B. Kalziumcarbonat, Apatit, Siliziumdioxid, Titandioxid, Aluminiumoxid, vernetztes Polystyrol, vernetztes Polymethylmethacrylat (PMMA), Zeolithe und andere Silikate wie Aluminiumsilikate. Diese Verbindungen werden im Allgemeinen in Mengen von 0,05 bis 5 Gew.-%, vorzugsweise 0,1 bis 0,6 Gew.-%, (bezogen auf das Gewicht der Folie) eingesetzt. Besonders bevorzugt sind dabei Kalziumcarbonat und Siliziumdioxid.

Die eingesetzten Teilchengrößen $d_{50}$ liegen zum Erreichen einer guten Laufsicherheit in der Produktion im Allgemeinen zwischen 0,1 und 20 $\mu$m und bevorzugt zwischen 0,3 und 7 $\mu$m und besonders bevorzugt zwischen 0,5 und 5 $\mu$m. Faserförmige anorganische Zuschlagstoffe wie Glasfasern sind ungeeignet, da sie die Produktion der Polyesterfolie durch viele Abrisse unwirtschaftlich machen.

Alle Partikelgrößenangaben beziehen sich auf den $d_{50}$-Wert vor der Einarbeitung der Partikel in das Polymer.

In einer bevorzugten Ausführungsform ist die Folie weiß. Als Weißpigment eignen sich insbesondere Titandioxid, Bariumsulfat oder inkompatible Polymere wie Polypropylen, Polyethylen oder COC (der Einsatz von inkompatiblen Polymeren ist gegenüber dem Einsatz von Weißpigmenten weniger bevorzugt, da die Wärmestabilität solcher Weißfolien weniger gut ist als die mit anorganischen Weißpigmenten) oder Kombinationen daraus. Diese werden dem Polyester zu 1 - 35 Gew.-% zugegeben, wobei die bevorzugte Zugabemenge zwischen 2 und 20 Gew.-% (bezogen auf das Gesamtgewicht der Folie) liegt. Besonders bevorzugt enthält die Folie in dieser Ausführungsform zwischen 3 und 10 Gew.-% (bezogen auf das Gesamtgewicht der Folie) Weißpigment. Die eingesetzten Teilchengrößen $d_{50}$ liegen zum Erreichen einer guten Laufsicherheit und eines hohen Weißgrads im Allgemeinen zwischen 0,05 und 5 $\mu$m und bevorzugt

zwischen 0,1 und 1 µm (gilt nur für anorganische Weißpigmente). Das bevorzugte Weißpigment ist $TiO_2$, da sich hierdurch bessere Bewitterungsstabilitäten erreichen lassen. Das Titandioxid ist dabei bevorzugt mit anderen Elementoxiden modifiziert und/oder gecoated (beschichtet). Bevorzugte Elemente sind Al, Si, V, P und Ca, sowie Kombinationen daraus. Solche Pigmente sind z.B. in US 3,981,737 oder EP-A-0 861 299 beschrieben. Weiße Folien haben sich insbesondere in Außenanwendungen gegenüber klaren Folien als überlegen erwiesen. Der Grund dafür liegt auch in der geringeren Schädigung der Stabilisatoren durch Licht. Daher hat es sich als günstig erwiesen, wenn die Folien eine Transparenz (ASTM D1003) von < 60 %, bevorzugt von < 40 %, aufweisen. Neben der Transparenz im sichtbaren Bereich, hat es sich als günstig erwiesen, wenn die Transparenz im UV-A-Bereich bei 370 nm bei < 20 % und bevorzugt bei < 10 % und idealerweise bei kleiner 5 % liegt.

Neben den erwähnten Additiven kann die Folie zusätzlich weitere Komponenten wie Flammschutzmittel (bevorzugt organische Phosphorsäureester) und/oder Radikalfänger/Antioxidantien und/oder UV-Stabilisatoren enthalten. Eine Auswahl geeigneter Antioxidantien und UV-Stabilisatoren findet sich in FR 2 812 299.

Neben den erfindungsgemäßen Polyestern, den Pigmenten (oder weniger bevorzugt unverträglichen Polymeren als Weißpigment), den Hydrolysestabilisatoren und Kettenverlängerern und im vorherigen Absatz erwähnten weiteren Additiven enthält die Folie üblicherweise weniger als 5 Gew.-%, besonders bevorzugt weniger als 1 Gew.-% und idealerweise gar keine weiteren Additive, insbesondere keine weiteren Polymere, da diese in gestreckten Folien generell die mechanischen Eigenschaften verschlechtern.

Die erfindungsgemäße Folie enthält einen Hydrolysestabilisator, wobei der Anteil des Hydrolysestabilisators im Bereich von 0,25 bis 20,0 Gew.-%, vorzugsweise von 1,0 bis 6,0 Gew.-% und besonders bevorzugt von 1,5 bis 5 Gew.-%, bezogen auf das Gesamtgewicht der Folie, liegt.

Geeignete Hydrolysestabilisatoren sind epoxidierte Fettsäureester und/oder epoxidierte Fettsäureglyceride.

Geeignete epoxidierte Fettsäureglyceride sind Mischungen von Glycerinestern oder reine Glycerinester, wobei die Glycerinester bevorzugt durch die folgende Formel beschrieben werden:

Formel 1: $CH_2OR_1\text{-}CHOR_2\text{-}CH_2OR_3$

wobei $R_1$ und $R_2$ und $R_3$ sowohl gleich als auch verschieden sein können. $R_1$, $R_2$ und $R_3$ folgen bevorzugt der folgenden Formel:

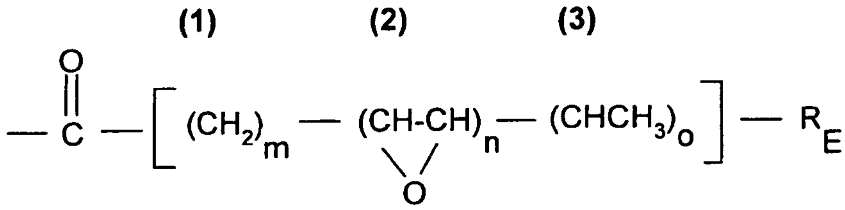

wobei
$R_E = CH_3$ oder H,
m = 1 - 40, bevorzugt 7 - 20, besonders bevorzugt 10 - 16,
n = 0 - 10, bevorzugt 1 - 4, besonders bevorzugt 2 - 3, und
o = 0 - 4, bevorzugt 0,
ist. Im Mittel liegt m üblicherweise zwischen 9 und 16 und besonders bevorzugt zwischen 11 und 13. n liegt im Mittel üblicherweise zwischen 1 und 3 und besonders bevorzugt zwischen 1,5 und 2,75 und idealerweise zwischen 2 und 2,5. o liegt bevorzugt im Mittel bei < 0,5.

Die Reihenfolge der einzelnen Methylen ($CH_2$)- (**1**), Epoxid (CHOCH)- (**2**) und ($CHCH_3$)- (**3**) Gruppen ist dabei beliebig, wobei üblicherweise mindestens 2 Methylengruppen (**1**) und besonders bevorzugt 7 Methylengruppen (**1**) auf die Carbonylgruppe folgen, bevor eine oder mehrere der Gruppen (**2**) oder (**3**) folgen und dann üblicherweise wieder mindestens eine Methylengruppe (**1**) folgt.

Reste $R_{1,2,3}$ mit m = 0 in Glycerinestermischungen sind zu weniger als 30 Gew.-% und bevorzugt zu weniger als 20 Gew.-% und besonders bevorzugt zu weniger als 10 Gew.-% (bezogen auf das Gesamtgewicht der Glycerinester) enthalten.

Einer oder mehrere der Reste $R_1$ und $R_2$ und $R_3$ können dabei unabhängig voneinander auch folgende Bedeutung haben:

$R_{1,2,3}$ = H
$R_{1,2,3}$ = ungesättigte (doppelbindungshaltige bzw. nicht vollständig epoxidierte) C8 - C40-Fettsäure

$R_{1,2,3}$ = $(PO_2)$-O-$(CH_2)_2$-$N(CH_3)_3$
$R_{1,2,3}$ = anderer nicht näher definierbarer organischer Rest (da meist biogenen Ursprungs),

wobei aber solche Glycerinester weniger bevorzugt sind und Glycerinester, die diese Reste enthalten, in Glycerinestermischungen üblicherweise zu weniger als 20 und besonders bevorzugt zu weniger als 5 Gew.-% enthalten sind; d. h. dass die zuvor genannten bevorzugten Glycerinester in Glycerinestermischungen üblicherweise zu mehr als 80 und besonders bevorzugt zu mehr als 95 Gew.-% enthalten sind.

Da es sich bei den eingesetzten Glycerinestern üblicherweise um epoxidierte Öle biogenen Ursprungs handelt, enthalten diese neben den Glycerinestern meist noch geringe Mengen anderer Substanzen (Proteine usw.). Der Anteil dieser Substanzen liegt üblicherweise bei unter 10 Gew.-% und bevorzugt bei unter 2 Gew.-%, bezogen auf das Gesamtgewicht der Hydrolysestabilisatoren.

Insbesondere der Anteil von Verbindungen mit einem Siedepunkt unter 210 °C liegt üblicherweise bei weniger als 5 Gew.-% und bevorzugt bei weniger als 1 Gew.-%, bezogen auf das Gesamtgewicht des Hydrolysestabilisatoren.

Geeignete epoxidierte Fettsäureester bzw. Mischungen epoxidierter Fettsäureester können durch die folgende Formel beschrieben werden:

Formel 2: $R_4OR_5$

wobei $R_4$ bevorzugt durch die folgende Formel beschrieben wird:

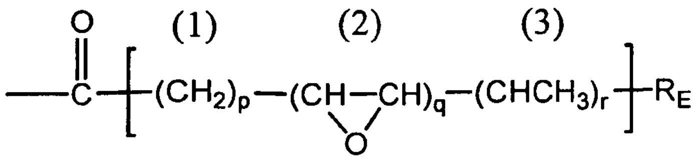

wobei
$R_E$= $CH_3$ oder H,
p = 1 - 40, bevorzugt 7 - 20, besonders bevorzugt 10 - 16,
q = 0 - 10, bevorzugt 1 - 4, besonders bevorzugt 2 - 3, und
r = 0 - 4, bevorzugt 0,
ist. Im Mittel liegt p üblicherweise zwischen 9 und 16 und bevorzugt zwischen 11 und 13. q liegt im Mittel üblicherweise zwischen 1 und 3 und bevorzugt zwischen 1,2 und 2,5. r liegt bevorzugt im Mittel bei < 0,5.

Die Reihenfolge der einzelnen Methylen $(CH_2)$- (**1**), Epoxid (CHOCH)- (**2**) und $(CHCH_3)$- (**3**) Gruppen ist dabei beliebig, wobei üblicherweise mindestens 2 Methylengruppen (**1**) und besonders bevorzugt 7 Methylengruppen (**1**) auf die Carbonylgruppe folgen, bevor eine oder mehrere der Gruppen (**2**) oder (**3**) und dann üblicherweise wieder mindestens einmal (**1**) folgen.

Der Rest $R_5$ wird bevorzugt durch die folgende Formel 3 beschrieben:

Formel 3: $-(CH_2)_s-R_6$

wobei s = 0 - 50, bevorzugt 1 - 20 und besonders bevorzugt 1 - 8, ist.
$R_6$ ist bevorzugt
H oder
$C_tH_{(2t+1)}$ mit t = 3-10, bevorzugt 5-8,
besonders bevorzugt
$-CH(CH_2-CH_3)-(CH_2)_3-CH_3$ , insbesondere in Verbindung mit s = 1
O-$R_4$ , wobei $R_4$ dem $R_4$ -Rest aus Formel 2 entspricht.
$R_6$ kann auch OH sein, diese Ausführungsform ist aber weniger bevorzugt.

Die epoxidiertern Fettsäurester enthalten üblicherweise weniger als 10 Gew.-% und bevorzugt weniger als 5 Gew.-% (bezogen auf das Gesamtgewicht der eingesetzten Fettsäureester) weitere Verbindungen, die nicht durch Formel 2 beschrieben sind; d. h. dass die zuvor genannten epoxidierten Fettsäureester in Mischungen solcher Ester üblicherweise zu mehr als 90 und besonders bevorzugt zu mehr als 95 Gew.-% enthalten sind.

Die Säurezahl der eingesetzten Hydrolysestabilisatoren liegt üblicherweise bei unter 10 und bevorzugt unter 2 mg KOH pro Gramm (DIN EN ISO 3682). Je höher die Säurezahl ist, desto höher ist die Gelbildungstendenz in Verbindung mit den eingesetzten Kettenverlängerern.

Für die Einarbeitung und für die Effektivität der Hydrolyseschutzwirkung hat es sich als günstig erwiesen, wenn die Viskosität der eingesetzten Stabilisatoren größer als 300 mPa•s, bevorzugt größer als 500 mPa•s und besonders bevorzugt größer als 700 mPa•s bei 25 °C ist (DIN 53018). Je niedriger die Viskosität ist, desto höher ist das Risiko von Viskositätsausschlägen nach unten in der Extrusion, die zu Abrissen führen können.

Besonders geeignet sind solche Hydrolysestabilisatoren, die einen Epoxidsauerstoffgehalt von mindestens 1 Gew.-%, bevorzugt mindestens 5 Gew.-% und besonders bevorzugt größer 7,5 Gew.-% aufweisen, da dadurch die Effektivität des Hydrolyseschutzes bezogen auf die Menge an Stabilisator steigt.

Geeignete epoxidierte Fettsäureglyceride sind z. B. epoxidiertes Sojabohnenöl, epoxidiertes Leinöl, epoxidiertes Rüböl, epoxidiertes Sonnenblumenöl und epoxidiertes Fischöl (die Zusammensetzung der genannten Öle, insbesondere die Art und Menge der vorhandenen Fettsäuren, ist beispielsweise beschrieben in Römpp Chemie Lexikon, 10. Auflage, Georg Thieme Verlag, Stuttgart, DE). Besonders bevorzugt wird epoxidiertes Leinöl eingesetzt. Als epoxidierte Fettsäureester werden bevorzugt die thermisch stabilen 2-Ethylhexylester ungesättigter Fettsäuren oder Fettsäuregemische der Rüböl, Leinöl, Sojaöl oder Fischöl zugrunde liegenden Fettsäuren eingesetzt, welche üblicherweise Epoxidgehalte von 1,5 - 15 Gew.-% Epoxidsauerstoff (bezogen auf die epoxidierten Fettsäureester), vorzugsweise 4 - 10 Gew.-%, aufweisen.

Es hat sich als günstig für die Hydrolysestabilität erwiesen, wenn der Anteil der durch Formel 1 beschriebenen Fettsäureglyceride am Gesamthydrolysestabilisatoranteil > 50 Gew.-% beträgt. Besonders günstig ist ein Anteil größer 66 Gew.-% und am günstigsten ein Anteil > 75 Gew.-%. Es hat sich gezeigt, dass die Fettsäureglyceride effektivere Hydrolysestabilisatoren sind als die entsprechenden epoxidierten Fettsäureester.

Weiterhin hat es sich als günstig erwiesen, wenn der Folie ein Stabilisator in Form eines Radikalfängers hinzugegeben wird, da dadurch dem Verlust an aktiven Oxirangruppen in der Extrusion durch radikalische Nebenreaktionen entgegengewirkt wird. Zweckmäßigerweise enthält die erfindungsgemäße Folie solche Stabilisatoren als Radikalfänger bzw. Thermostabilisatoren in Mengen von 50 bis 15000 ppm, bevorzugt 100 bis 5000 ppm, besonders bevorzugt 300 bis 1000 ppm, bezogen auf das Gewicht der Folie. Die dem Polyesterrohstoff zugegebenen Stabilisatoren werden beliebig ausgewählt aus der Gruppe der primären Stabilisatoren wie sterisch gehinderte Phenole oder sekundäre aromatische Amine oder der Gruppe der sekundären Stabilisatoren wie Thioether, Phosphite und Phosphonite sowie Zinkdibutyl-dithiocarbamat oder synergistische Mischungen aus primären und sekundären Stabilisatoren. Bevorzugt sind die phenolischen Stabilisatoren. Zu den phenolischen Stabilisatoren zählen insbesondere sterisch gehinderte Phenole, Thio-bisphenole, Alkyliden-bisphenole, Alkyl-phenole, Hydroxybenzyl-Verbindungen, Acyl-amino-phenole und Hydroxyphenylpropionate (entsprechende Verbindungen sind beispielsweise beschrieben in "Kunststoffadditive", 2. Ausgabe, Gächter Müller, Carl Hanser-Verlag, und in "Plastics Additives Handbook", 5. Ausgabe, Dr. Hans Zweifel, Carl Hanser-Verlag). Besonders bevorzugt sind die Stabilisatoren mit folgenden CAS-Nummern: 6683-19-8, 36443-68-2, 35074-77-2, 65140-91-2, 23128-74-7, 41484-35-9, 2082-79-3 sowie Irganox® 1222 der Firma Ciba Specialities, Basel, Schweiz, wobei in besonderen Ausführungsformen die Typen Irganox 1010, Irganox 1222, Irganox 1330 und Irganox 1425 oder Mischungen daraus bevorzugt sind.

Überraschenderweise hat es sich als günstiger erwiesen, wenn der Radikalfänger nicht dem Hydrolysestabilisator, sondern dem Polyesterrohstoff bereits bei der Polymerherstellung hinzugegeben wird.

Neben dem Hydrolysestabilisator enthält die Folie einen Kettenverlängerer.

Kettenverlängerer sind Moleküle mit mindestens zwei reaktiven Gruppen, die während der Extrusion mit den Polyestern reagieren und Polyesterketten miteinander verknüpfen können. Von den Hydrolyseschutzmitteln (z. B. Fettsäureepoxide, polymere Carbodiimide) unterscheiden sie sich dadurch, dass ihre reaktiven Gruppen bereits während der Extrusion weitgehend (> 75 %) abreagieren und für eine Kettenreparatur (Verlängerung) während der Nutzung der Polyesterfolie nach ihrer Produktion nicht mehr zur Verfügung stehen. Die Kettenverlängerer werden dabei bevorzugt aus den Gruppen der Bisoxazoline, der Carbonyllactame, polyfunktionellen Anhydride (gegebenenfalls kombiniert mit Polyolen) und der bi/polyfunktionellen terminalen Epoxide ausgewählt. "Bi/polyfunktionell" beschreibt dabei die Anzahl der funktionellen Gruppen, also bspw. die Anzahl der Epoxid-, Anhydrid- oder Alkoholgruppen; "terminal" bedeutet, dass sich die funktionelle Gruppe, bspw. Epoxidgruppe am Ende einer Kette oder Seitenkette befindet.

Bisoxazoline (wie 1,3-PBO von DSM (Niederlande) unter dem Markennamen Allinco vertrieben) waren bis zu einer Konzentration von 0,5 Gew.-% (bezogen auf das Gesamtgewicht der Folie) in Kombination mit den erfindungsgemäßen Hydrolyseschutzmitteln unwirksam. Bei höheren Konzentrationen (bis zu einer Konzentration von 2 Gew.-%) kam es ansatzweise zu einer Stabilisierung der Viskosität in der Extrusion, es trat aber gleichzeitig eine deutliche Gelbfärbung der Folie auf, und es kam zu einem Ausschwitzen des jeweiligen Oxazolins aus der Folie, was zu Belägen auf den Walzen in der Folienproduktion führte. Oberhalb von 2 Gew.-% war keine stabile Produktion mehr möglich. Bisoxazoline sind daher im Sinne der Erfindung als Kettenverlängerer weniger bevorzugt.

Carbonylbiscaprolactam (CBC) wird ebenfalls unter dem Markennamen Allinco von DSM (Niederlande) als Kettenverlängerer vertrieben. CBC ist in Kombination mit den erfindungsgemäßen Hydrolysestabilisatoren in Konzentrationen von 0,1 bis 1,3 Gew.-% (bezogen auf das Gesamtgewicht der Folie) wirksam. Darunter ist der Effekt zu gering und darüber kommt es zu Gelen und sprunghaftem Viskositätsanstieg in der Extrusion. Wichtig ist dabei, das CBC

gleichzeitig, am besten gemischt mit dem/den Hydrolysestabilisator/en dosiert wird, denn wenn diese fehlen, führt bereits eine Konzentration von 0,6 Gew.-% zu sprunghaften Viskositätsanstiegen in der Extrusion mit der Folge von Abrissen in der Produktion. Der bevorzugte Einsatzbereich von CBC liegt bei 0,2 bis 0,5 Gew.-%. Entgegen den Erwartungen kam es aber auch mit CBC zu Ausschwitzungen mit Belägen auf Walzen und zu einer Gelbfärbung der Folie. Dieser Effekt wird durch das Hydrolyseschutzmittel verstärkt. Die Hydrolysegeschwindigkeit der Folien, die CBC und andere Carbonyllactame enthalten, ist zudem leicht höher als die der Folien ohne diese. CBC und andere Carbonyllactame sind daher im Sinne der Erfindung als Kettenverlängerer weniger bevorzugt.

Polyfunktionelle Anhydride (Polyanhydrid, polyfunktionell = hier mehrere Anhydridfunktionen) eignen sich als Kettenverlänger sowohl als Einzelkomponente als auch in Kombination mit polyfunktionellen Alkoholen. Geeignete Polyanhydride und Polyalkohole sind in EP-A-1 054 031 beschrieben. Bevorzugt werden Tetracarbonsäuredianhydride eingesetzt. Besonders bevorzugt ist dabei Pyromellitsäuredianhydrid. Bevorzugte polyfunktionelle Alkohole sind Glykol und Pentaerythrit, wobei Pentaerythrit besonders bevorzugt ist.

Der Anteil an Polyanhydrid liegt dabei zweckmäßigerweise unter 5 Gew.-% (darüber Gefahr sprunghafter Viskositätsanstiege), bevorzugt unter 1,5 Gew.-% und besonders bevorzugt bei kleiner 1 Gew.-% (bezogen auf das Gesamtgewicht der Folie). Für eine optimale Wirkung sollte ein Anteil von 0,3 Gew.-% nicht unterschritten werden.

Eine besonders gute Viskositätsstabilisierung konnte erreicht werden, wenn der Anteil an Polyalkoholen dabei unter 2 Gew.-%, bevorzugt unter 1 Gew.-% und besonders bevorzugt bei kleiner 0,5 Gew.-% (bezogen auf das Gesamtgewicht der Folie), liegt.

Optional können auch Phosphonate wie in EP-A-1 054 031 beschrieben eingesetzt werden. Der Anteil solcher Verbindungen liegt unter 2 Gew.-% und sollte bevorzugt 0,2 Gew.-% (bezogen auf das Gesamtgewicht der Folie) nicht überschreiten, idealerweise werden unter 0,05 Gew.-% solcher Verbindungen eingesetzt.

Der Einsatz von Polyanhydriden und Mischungen derselben mit Polyolen und Phosphonaten führt zu einer Stabilisierung der Viskosität im Extruder. Auf der anderen Seite führt der Einsatz dieser Verbindungen aber auch zu einem deutlichen Anstieg des Gelniveaus, und die resultierenden Folien weisen eine höhere Hydrolysegeschwindigkeit auf als Folien ohne Kettenverlängerer aus dieser Gruppe. Die Hydrolysegeschwindigkeit steigt dabei insbesondere mit steigendem Anteil an Phosphonat und leicht mit steigendem Anteil an Polyalkohol.

Bevorzugte Kettenverlängerer im Sinne der Erfindung sind difunktionelle Epoxide und besonders bevorzugt polyfunktionelle Epoxide ("funktionell" beschreibt hier die Anzahl der Epoxidfunktionen). Die Epoxidfunktion ist dabei terminal am Ende der Molekülkette oder einer Seitenkette angeordnet (= epoxidische Kettenverlängerer).

Die terminalen Epoxidfunktionen werden dabei bevorzugt durch Formel 4 beschrieben.

Formel 4 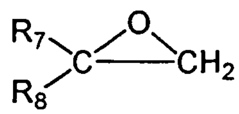

$R_7$ und $R_8$ können dabei beliebige organische Reste (aliphatisch oder aromatisch oder Kombinationen daraus) sein, wobei $R_7$ bevorzugt H ist.

Polyfunktionelle Epoxide sind dabei gegenüber den bifunktionellen bevorzugt, da geringere Einsatzmengen benötigt werden, höhermolekulare Endprodukte entstehen und es zu weniger gasförmigen Spaltprodukten kommt. Die Anzahl der Epoxidgruppen im Molekül ist dabei größer 1, bevorzugt größer 2 und besonders bevorzugt größer 5. Die Anzahl der Epoxidfunktionen pro Molekül ist üblicherweise < 100, bevorzugt < 20 und idealerweise < 10. Je größer die Anzahl der Epoxidfunktionen, desto größer der Kettenverlängerungseffekt, aber umso größer auch die Tendenz zur Gelbildung.

Das Epoxiäquivalenzgewicht in g/mol (Molekulargewicht/Anzahl der Epoxidfunktionen) ist üblicherweise > 200, bevorzugt > 300 und idealerweise > 425. Es ist üblicherweise < 2000 und bevorzugt < 1000. Je höher das Epoxiäquivalenzgewicht ist, desto geringer wird die Tendenz zur Gelbildung. Mit steigendem Epoxiäquivalenzgewicht wird aber mehr in Gew.-% von der Verbindung benötigt, um einen effektiven Viskositätsanstieg zu erreichen.

Das Molekulargewicht der epoxidischen Kettenverlängerer ist dabei üblicherweise > 1500, bevorzugt > 2000 und idealerweise > 3000. Es ist üblicherweise < 15000, bevorzugt < 10000 und idealerweise < 5000. Im angegebenen Molekulargewichtsbereich wird die beste Einbindung in die Polyestermatrix erreicht.

Die epoxidischen Kettenverlängerer sind dabei bevorzugt bei Raumtemperatur flüssig.

Molekulargewicht, Anzahl der Epoxidgruppen und Epoxiäquivalenzgewicht können dabei unabhängig voneinander gewählt werden. Besonders geeignet sind Kettenverlängerer, bei denen alle drei Eigenschaften im idealen Bereich liegen.

Bisphenolhaltige Epoxide wie die der Araldite-Reihe oder die entsprechenden Epon-Produkte sind weniger bevorzugt, da diese Bisphenol A in der Struktur enthalten und dieses abspalten können, welches in der Raumluft nachgewiesen werden kann.

Bevorzugte Epoxide sind dabei Co- bzw. Terpolymere aus Glycidylmethacrylat und Ethylen und/oder Estern der Acrylsäure. Solche Epoxide werden z. B. unter dem Markennamen Lotader® von Arkema, Frankreich, vertrieben. Hierbei sind insbesondere Lotader AX8840, AX8900 und AX8950 geeignet. Allerdings sind Polymere der Lotaderreihe, die keine Glycidylgruppen enthalten, ungeeignet. Insbesondere ungeeignet sind Polymere, die anstelle der Glycidylgruppen maleinsäureanhydridhaltige Monomere enthalten. Generell sind Polymere, die maleinsäureanhydridhaltige Monomere enthalten, weniger geeignet, da diese zu starker Gelbildung in Verbindung mit den Hydrolysestabilisatoren neigen. Ein verarbeitungstechnischer Nachteil bei den ansonsten geeigneten Verbindungen der Lotader-Reihe ist, dass sie bei Raumtemperatur fest sind und daher nicht mit den Hydrolysestabilisatoren gemischt werden können. Sie müssen erst aufschmelzen, um zu reagieren, und sind mit den Polyestern nicht gut mischbar. Dadurch werden relativ hohe Einsatzmengen von zweckmäßigerweise > 2 Gew.-% , bevorzugt > 4 Gew.-%, (bezogen auf das Gesamtgewicht der Folie) benötigt, um eine gute Viskositätsstabilisierung zu erreichen. Mit zunehmender Dosierung steigt aber das Risiko der Gelbildung und das Risiko sprunghafter Viskositätsanstiege mit dem Risiko von Produktionsunterbrechungen und in Extremfällen sogar der Beschädigung von Extrusionsbauteilen. Bei einer Dosierung > 10 Gew.-% kommt es zu starker Gelbildung.

Besonders bevorzugte Kettenverlängerer im Sinne der Erfindung sind Polymere, die durch Formel 5 beschrieben werden. Formel 5:

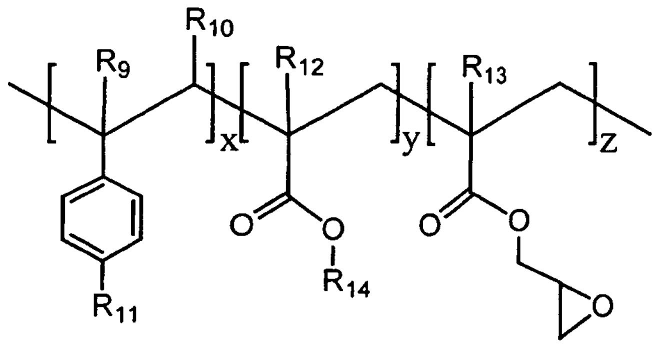

| | |
|---|---|
| $R_9$ - $R_{13}$ | sind dabei unabhängig voneinander H oder ein C1- bis C12-Alkylrest, bevorzugt $-CH_3$. |
| $R_{14}$ | ist eine C1- bis C12-Alkylgruppe, bevorzugt $CH_3$. |
| x und y | liegen zwischen 0 und 100 und bevorzugt zwischen 1 und 20. |
| x + y | ist größer als 0 und bevorzugt größer als 10. |
| Z | liegt zwischen 2 und 100, bevorzugt zwischen 3 und 20 und besonders bevorzugt zwischen 3 und 10. |

Diese Angaben beziehen sich auf das Mittel der eingesetzten Polymere, da einzelne Polymerketten in sich statistisch verteilte Monomeranteile aufweisen können, die von den bevorzugten Bereichen abweichen können.

Diese Verbindungen zeichnen sich durch eine besonders gute Einbindung in die Polyestermatrix aus und haben gleichzeitig eine sehr gute kettenverlängernde Wirkung bei geringer Gelbildungstendenz.

Solche Polymere werden von der BASF unter dem Markennamen Joncryl® ADR vertrieben. Besonders bevorzugt sind dabei die flüssigen Produkte.

Diese Polymere werden üblicherweise zu weniger als 2 Gew.-% dosiert und besonders bevorzugt zu weniger als 1,2 Gew.-%. Es wird dabei üblicherweise mindestens 0,1 Gew.-% und besonders bevorzugt mindestens 0,5 Gew.-% (bezogen auf das Gesamtgewicht der Folie) dosiert.

Die Folien mit Hydrolysestabilisator und Kettenverlängerer in den erfindungsgemäßen Bereichen sind hydrolysestabiler als Folien ohne Hydrolysestabilisator.

Die bevorzugten und besonders bevorzugten Kettenverlängerer auf Basis von Epoxidgruppen waren überraschenderweise die einzigen Kettenverlängerer, die in den resultierenden Folien nicht zu einer höheren Hydrolysegeschwindigkeit im Vergleich zu Folien ohne Kettenverlängerer führten. Ebenfalls überraschend war, dass diese epoxidhaltigen Kettenverlängerer in der Extrusion nicht bevorzugt mit den ebenfalls epoxidischen Hydrolysestabilisatoren reagieren, was zu Gelen (und verringerter Hydrolysestabilisierung durch den abreagierten Hydrolyestabilisator) und nicht zu einer Kettenverlängerung führen würde. Dies wäre angesichts der bekannten Homopolymerisierungsneigung von Epoxiden bei den Verarbeitungstemperaturen zu erwarten gewesen.

Das Hydrolyseschutzmittel und die Kettenverlängerer senken die mechanische Festigkeit und Reißdehnung der biaxial gestreckten Polyesterfolien. Sie führen zudem tendenziell zu einer geringeren Spannungsfestigkeit in den bevorzugten Elektroisolieranwendungen. Um dieser nachteiligen Tendenz entgegenzuwirken, liegt die Summe aus

Hydrolyseschutzmittel und Kettenverlängerer zweckmäßigerweise bei < 12 Gew.-%, bevorzugt bei < 8 Gew.-% und idealerweise bei < 6 Gew.-% (bezogen auf das Gesamtgewicht der Folie). Die Summe aus Kettenverlängerer und Hydrolysestabilisator sollte zweckmäßigerweise mindestens 1 Gew.-% und bevorzugt mindestens 2 Gew.-% betragen, damit ein effektiver Hydrolyseschutz und eine gleichmäßige Einmischung in die Polymermatrix gewährleistet ist.

Hydrolyseschutzmittel und Kettenverlängerer werden bevorzugt direkt bei der Folienherstellung in den Extruder dosiert. Besonders bevorzugt ist dabei, wenn Hydrolyseschutzmittel und Kettenverlängerer vorgemischt werden und zusammen in den Extruder dosiert werden. So kann besonders effektiv ein sprunghafter Viskositätsanstieg in der Extrusion vermieden werden, da die Kettenverlängerer immer neben den tendenziell (Schmelze-)Viskositäts-reduzierenden Hydrolysestabilisatoren vorliegen. Bevorzugt werden Mehrschneckenextruder (mindestens 2 Schnecken) eingesetzt.

Hydrolyseschutzmittel und der Kettenverlängerer können auch über die Masterbatchtechnologie eingebracht werden. D. h. das Hydrolyseschutzmittel und/oder der Kettenverlängerer (zusammen oder separat) wird/werden in einem Extruder (bevorzugt ein Mehrschneckenextruder) in das Polymer eingebracht. Diese/s Polymer/e wird/werden dann bei der Folienherstellung pur oder mit anderen Polymeren gemischt erneut extrudiert. Dieses Verfahren ist jedoch weniger bevorzugt, da bereits im ersten Extrusionsschritt Hydrolyseschutzmittel verbraucht (abreagiert) wird, welches dann in der Folie nicht mehr als aktive Substanz zur Verfügung steht. Das gleiche gilt insbesondere für die Kettenverlängerer, deren Aktivität auch bei besonders schonenden Extrusionsbedingungen durch die Masterbatchherstellung massiv reduziert wird.

Die Folie gemäß der Erfindung wird im Allgemeinen nach an sich bekannten Extrusionsverfahren hergestellt und ist ein- oder mehrschichtig, wobei der Hydrolysestabilisator in allen Schichten enthalten sein kann, jedoch auch Ausführungen möglich sind, in denen nicht alle Schichten mit dem Hydrolysestabilisator ausgerüstet sind.

Die Foliendicke liegt bevorzugt zwischen 11 und 500 μm und besonders bevorzugt zwischen 24 und 300 μm. In mehrschichtigen Ausführungsformen ist die Summe der Dicken der Hydrolysestabilisator-haltigen Schichten bevorzugt größer als 10 μm und kleiner als 500 μm und besonders bevorzugt > 40 μm und kleiner als 300 μm. Bei sehr dicken Schichten treten eher Viskositätsunregelmäßigkeiten in der Produktion auf. Gesamtschichtstärken der Hydrolysestabilisator-haltigen Schichten unterhalb des bevorzugten Bereiches, reichen in Außenanwendungen (bei Verwendung nur einer solchen Folienlage) in der Regel nicht aus, um die gesamte Folie über die erwartete Verwendungszeit hinweg ausreichend zu stabilisieren.

In einer bevorzugten Ausführungsform enthält die Folie mindestens auf einer Seite, bevorzugt auf beiden Seiten eine Deckschicht, welche keinen Hydrolysestabilisator enthält. Diese Schichten werden bevorzugt so dünn wie möglich ausgeführt, um die Hydrolysestabilität der Gesamtfolie so wenig wie möglich zu beeinträchtigen. D. h. diese Schichten sind bevorzugt jeweils dünner als 5 μm, besonders bevorzugt dünner als 3 μm und idealerweise dünner als 0,8 μm. Es hat sich jedoch als günstig μrwiesen, wenn die Schicht nicht dünner als 0,1 μm ist (unterhalb von 0,1 μm ist keine ausreichende Barriere gegen die Migration der Hydrolysestabilisatoren mehr vorhanden).

Die Hydrolysestabilisator-freien Schichten können prinzipiell die gleichen Polymere und Zusatzstoffe (mit Ausnahme der beschriebenen Hydrolysestabilisatoren) enthalten wie die Schicht/Schichten, welche den Hydrolysestabilisator enthält. Es hat sich jedoch als günstig erwiesen, wenn der Polyesterrohstoff der Hydrolysestabilisator-freien Schichten einen möglichst geringen Gehalt an Carboxylendgruppen aufweist. Solche Rohstoffe sind u. a. in EP-A-0 738 749 beschrieben. In einer bevorzugten Ausführung ist der Carboxylgehalt ausgedrückt in mmol$H^+$/kg Polymer (gewichteter Mittelwert aller eingesetzten Polymere) kleiner 25, besonders bevorzugt kleiner 15 und idealerweise < 8 mmol$H^+$/kg Polymer. Solche Werte können z. B. durch Feststoffkondensation oder durch Endcapping erreicht werden. Die Viskosität der eingesetzten Rohstoffe liegt dabei üblicherweise zwischen einem IV von 0,61 und 0,75 (IV gemessen in Trichlorethan/ Phenol wie in US-A-3,432,591 beschrieben). Höhere IV-Werte wie z. B. in EP-A-0 738 749 beschrieben haben sich in der Praxis als eher ungünstig erwiesen, da die hohen Viskositäten im Extruder höhere Temperaturen bzw. höhere Scherraten benötigen und so die Hydrolyseneigung der Schmelze wächst. Die IV-Werte der Rohstoffe, welche in der/den Schicht/Schichten mit Hydrolysestabilisator zum Einsatz kommen, sollten ebenfalls bevorzugt bei 0,61-0,75 liegen. Insbesondere hat es sich als günstig erwiesen, wenn der Unterschied der IV-Werte der stabilisatorhaltigen Schicht (bei Schichten der Mittelwert) und der IV-Werte der Schicht ohne Hydrolysestabilisator (bei Schichten der Mittelwert) nicht größer als 0,1 und bevorzugt nicht größer als 0,03 ist. Die bevorzugte Ausführungsform mit mindestens einer Hydrolysestabilisator-freien Deckschicht führt in der Produktion zu einer geringeren Geruchsbelästigung durch die eingesetzten Fettsäureepoxide und ist besser metallisierbar und laminierbar (d. h. Metalle und Kleber haften besser auf dieser Schicht).

Bei dem Verfahren zur Herstellung der erfindungsgemäßen Folien wird zweckmäßigerweise so vorgegangen, dass die entsprechenden Schmelzen durch eine Flachdüse extrudiert werden, die so erhaltene Folie zur Verfestigung auf einer oder mehreren Walze/n (Kühlwalze) als weitgehend amorphe Vorfolie abgezogen und abgeschreckt wird, die Folie anschließend erneut erhitzt und biaxial gestreckt (orientiert) und die biaxial gestreckte Folie thermofixiert wird. Im Bereich der Extrusion hat es sich dabei als günstig erwiesen, wenn Temperaturen von 295 °C nicht überschritten werden. Besonders günstig ist es, wenn der Bereich der Düse und speziell der Bereich der Düsenlippe und nahe daran nicht wärmer als 290 °C, bevorzugt nicht wärmer als 285 °C und besonders bevorzugt nicht wärmer als 275 °C, ist. Je höher die Temperatur ist, desto höher ist der thermische Stress auf die Stabilisatoren und desto höher die Neigung zur Gelbildung. Eine höhere Temperatur an dieser Stelle erhöht zudem die Menge an austretenden Hydrolysestabilisatoren.

Die biaxiale Verstreckung wird im Allgemeinen sequentiell durchgeführt. Dabei wird vorzugsweise erst in Längsrichtung (d. h. in Maschinenrichtung = MD-Richtung) und anschließend in Querrichtung (d. h. senkrecht zur Maschinenrichtung = TD-Richtung) verstreckt. Dies führt zu einer Orientierung der Molekülketten. Das Verstrecken in Längsrichtung lässt sich mit Hilfe zweier entsprechend dem angestrebten Streckverhältnis verschieden schnell laufender Walzen durchführen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den gewünschten Eigenschaften der Folie. Im Allgemeinen wird die Längs- und auch die Querstreckung bei $T_g$ + 10 °C bis $T_g$ + 60 °C ($T_g$ = Glastemperatur der Folie) durchgeführt. Das Längsstreckverhältnis liegt allgemein im Bereich von 2,0 : 1 bis 6,0 : 1, vorzugsweise 3,0 : 1 bis 4,5 : 1. Das Querstreckverhältnis liegt allgemein im Bereich von 2,0 : 1 bis 5,0 : 1, vorzugsweise 3,0 : 1 bis 4,5 : 1, und das einer gegebenenfalls durchgeführten zweiten Längs- und Querstreckung liegt bei 1,1 : 1 bis 5,0 : 1.

Die Längsstreckung kann gegebenenfalls gleichzeitig mit der Querstreckung (Simultanstreckung) durchgeführt werden. Als besonders günstig hat es sich dabei erwiesen, wenn das Streckverhältnis in Längs- und Querrichtung jeweils größer als 3,0 ist.

Bei der nachfolgenden Thermofixierung wird die Folie etwa 0,1 bis 10 s lang bei einer Temperatur von 150 bis 260 °C, vorzugsweise 200 bis 245 °C, gehalten. Anschließend an beziehungsweise beginnend in der Thermofixierung wird die Folie um 0 bis 15 %, vorzugsweise um 1,5 bis 8 %, in Quer- und gegebenenfalls auch in Längsrichtung relaxiert und die Folie dann in üblicher Weise abgekühlt und aufgewickelt.

Eine auf diese Weise hergestellte Folie weist eine deutlich geringere Hydrolyseneigung sowohl bei Raumtemperatur als auch bei Temperaturen bis 210 °C auf als eine unmodifizierte Polyesterfolie. Gegenüber den in EP-A-1 634 914 beschriebenen Folien mit epoxidierten Fettsäuren als Hydrolysestabilisator ohne Kettenverlängerer konnte die Produktivität wesentlich gesteigert werden, da keine Viskositätsspitzen nach unten in der Extrusion mehr auftreten, die zu Abrissen in der Produktion führen.

Die Stabilisierung ist dabei weitgehend unabhängig von der Foliendicke und der Temperatur in einem Messbereich von 25 bis 210 °C.

Die erfindungsgemäßen Folien weisen nach 96 h im Autoklaven bei Wasserdampfsättigung und 110 °C noch einen SV-Wert von über 500 auf und sind damit noch mechanisch stabil, während eine unstabilisierte Folie nach dieser Zeit bereits unter SV 400 abgefallen ist und damit so gut wie keine Biegebruchfestigkeit mehr aufweist. Die stabilisierte Folie hält 300 % länger unter den genannten Bedingungen aus, bis sie die kritische Grenze von 400 SV-Einheiten erreicht. Die selbe relative Lebenszeitverlängerung findet man auch bei 80 °C und bei 170 °C.

Folien, die mittels der genannten Hydrolysestabilistoren und Kettenverlängerer stabilisiert werden, eignen sich hervorragend zur Herstellung von Produkten, die Polyesterfolien enthalten und entweder für eine lange Lebensdauer (größer 1 Jahr) ausgelegt sind oder die während ihres Einsatzes mit höheren Temperaturen (größer 80 °C), insbesondere bei hoher Feuchte (größer 50 % rel. Feuchte), konfrontiert werden, und für Außenanwendungen.

Eine weitere Anwendung sind z. B. Flachbandkabel in Automobilen. Hierzu werden Folien (bevorzugt mit Dicken im Bereich von 12 - 200 μm) mittels eines Heißsiegelklebers (z. B. EKP-Heißsiegellack 230 der Firma EKP Verpackungslacke GmbH (Deutschland)) mit Kupfer laminiert. Verbunde, die Polyester mit Hydrolyseschutzmittel und Kettenverlängerern enthalten, halten dabei den in Automobilen auftretenden mechanischen Belastungen (u. a. Vibrationen) weit länger Stand als Verbunde mit herkömmlichen Polyesterfolien. Hierbei ist jedoch darauf zu achten, dass auch die Kleber weitgehend hydrolyseunempfindlich sind (bei polyesterbasierten Klebern empfiehlt sich eine Ausrüstung mit den genannten Hydrolysestabilisatoren).

Eine weitere bevorzugte Anwendung ist die Verwendung im Rückseitenlaminat von Solarmodulen. Hier hat es sich als günstig erwiesen, wenn der Schrumpf der Folie (bei 150°C, 30 min) in MD bei < 1,5 % und TD bei < 1,2 % liegt. Da die eingesetzten Stabilisatoren tendenziell zu einer Erhöhung der Schrumpfwerte führen, hat es sich als günstig erwiesen, wenn die Summe der Gew.-% aus Hydrolysestabilisator und Kettenverlängerer in den bevorzugten Bereichen liegt und/oder wenn die maximale Fixiertemperatur > 225 °C ist und die Folie um mehr als 4 % in Querrichtung relaxiert wird. Die Dicke von in Solarmodulen eingesetzten Folien liegt bevorzugt bei > 25 μm und besonders bevorzugt bei > 45 μm.

In einer bevorzugten Ausführungsform für Elektroisolieranwendungen (wie z. B. Kabel und Rückseitenlaminate von Solarmodulen) hat die Folie in beiden Raumrichtungen einen E-Modul von größer 3000 $N/mm^2$ und besonders bevorzugt in beiden Raumrichtungen einen E-Modul von größer 4000 $N/mm^2$ und idealerweise größer 4500 $N/mm^2$. Dies hat den Vorteil einer besseren elektrischen Isolierwirkung gegenüber weniger orientierten Materialien. Erreicht werden diese Werte z. B., wenn die Summe der Gew.-% aus Hydrolysestabilisator und Kettenverlängerer in den bevorzugten Bereichen liegt, insbesondere wenn das Streckverhältnis in beiden Richtungen größer 3,1 und bzw. besser größer 3,3 ist.

In einer bevorzugten Ausführungsform für Elektroisolieranwendungen (wie z.B. Kabel und Rückseitenlaminate von Solarmodulen) weist die Folie eine Dichte von größer 1,1 $g/cm^3$, besonders bevorzugt von größer 1,3 $g/cm^3$ und

idealerweise von größer 1,4 g/cm$^3$, auf. Hierdurch wird wie durch die hohe mechanische Festigkeit die Elektroisolierwirkung verbessert. Erreicht werden kann dies z. B. dadurch, dass die Summe der Gew.-% aus Hydrolysestabilisator und Kettenverlängerer in den bevorzugten Bereichen liegt und/oder wenn die maximale Fixiertemperatur mindestens 200 °C beträgt.

In den nachfolgenden Ausführungsbeispielen erfolgt die Messung der einzelnen Eigenschaften gemäß den angeführten Normen bzw. Verfahren.

**Messmethoden**

**Standardviskosität (SV)**

Die Standardviskosität SV wird - angelehnt an DIN 53726 - durch die Messung der relativen Viskosität $\eta_{rel.}$ einer 1 Gew.-%igen Lösung in Dichloressigsäure (DCE) in einem Ubbelohde Viskosimeter bei 25 °C gemessen. Der SV-Wert ist wie folgt definiert:

$$SV = (\eta_{rel.} - 1) \bullet 1000$$

**Schrumpf**

Der thermische Schrumpf wird an quadratischen Folienmustern mit einer Kantenlänge von 10 cm bestimmt. Die Proben werden so ausgeschnitten, dass eine Kante parallel zur Maschinenrichtung und eine Kante senkrecht zur Maschinenrichtung verläuft. Die Proben werden genau ausgemessen (die Kantenlänge $L_0$ wird für jede Maschinenrichtung TD und MD bestimmt, $L_{0\,TD}$ und $L_{0\,MD}$) und werden 15 min bei der angegeben Schrumpfungstemperatur (hier 200 °C) in einem Umlufttrockenschrank getempert. Die Proben werden entnommen und bei Raumtemperatur genau ausgemessen (Kantenlänge $L_{TD}$ und $L_{MD}$). Der Schrumpf ergibt sich aus der Gleichung

$$\text{Schrumpf [\%] MD} = 100 \bullet (L_{0\,MD} - L_{MD}) / L_{0\,MD}$$

$$\text{Schrumpf [\%] TD} = 100 \bullet (L_{0\,TD} - L_{TD}) / L_{0\,TD}$$

**Messung der Transparenz**

Die Messung erfolgt an einem Haze-gard Plus der Fa. BYK Gardner Instruments nach ASTM D 1003.

**Messung der Transparenz bei 370 nm**

Die Messung der Transparenz erfolgt mit einem Lambda 3 UV/Vis Spektrometer der Firma Perkin Elmer.

**Messung der Dichte**

Die Dichte kann in einer Gradientensäule (z. B. Tetrachlorkohlenstoff und Hexan) oder mittels eines Gaspyknometers (Helium oder Stickstoff) bestimmt werden.

**Messung des mittleren Partikeldurchmessers $d_{50}$ an Partikeln vor der Einbringung in den Rohstoff**

Die Bestimmung des mittleren Partikeldurchmessers $d_{50}$ wird mittels Laser auf einem Master Sizer (Malvern Instruments, UK) nach der Standardmethode durchgeführt (andere Messgeräte sind z. B. Horiba LA 500 (Horiba Ltd., Japan) oder Helos (Sympatec GmbH, Deutschland), welche das gleiche Messprinzip verwenden). Die Proben werden dazu in eine Küvette mit Wasser gegeben und diese dann in das Messgerät gestellt. Der Messvorgang ist automatisch und beinhaltet auch die mathematische Bestimmung des $d_{50}$-Wertes. Der $d_{50}$-Wert wird dabei definitionsgemäß aus

der (relativen) Summenkurve der Partikelgrößenverteilung bestimmt: Der Schnittpunkt des 50 %-Ordinatenwertes mit der Summenkurve liefert auf der Abszissenachse den gewünschten $d_{50}$-Wert.

**Messung der mechanischen Eigenschaften der Folie**

Die Bestimmung der mechanischen Eigenschaften erfolgt nach DIN EN ISO 527-1 bis 3.

**Autoklavierung**

Die Folien (10 • 2 cm) werden an einem Draht in den Autoklaven (Adolf Wolf SANOklav Typ: ST-MCS-204) gehängt und der Autoklav mit 2 l Wasser befüllt. Nach dem Schließen des Autoklaven wird dieser erhitzt. Bei 100 °C wird die Luft durch den Wasserdampf über das Ablassventil verdrängt. Dies wird nach ca. 5 min geschlossen, worauf die Temperatur auf 110 °C und der Druck auf 1,2 - 1,5 bar ansteigt. Nach der eingestellten Zeit wird der Autoklav automatisch abgeschaltet und nach Öffnen des Ablassventils die Folien entnommen. An diesen wird dann der SV-Wert bestimmt.

**Beispiele**

Hydrolysestabilisator 1 (HStab 1)

Epoxidiertes Leinöl mit einem Epoxidsauerstoffgehalt von 8,9 % von Arkema, USA. Das Leinöl entspricht Formel 1 mit den Variablen in den dort angegebenen Größenordnungen.

Hydrolysestabilisator 2 (HStab 2)

2-Hexylethylester von Leinöl ((2-Hexylethyl)ester der Leinölfettsäuren) mit einem Epoxidsauerstoffgehalt von 7 % von Arkema, USA. Hstab 2 entspricht Formel 2 mit den Variablen in den dort angegebenen Größenordnungen.

Kettenverlängerer 1

Johncryl® 4380 (bei Raumtemperatur flüssig) mit einem Molekulargewicht von 3300 und einem Epoxyäquivalenzgewicht von 450 g/mol. Johncryl 4380 entspricht Formel 5 mit den Variablen in den dort angegebenen Größenordnungen.

Weitere verwendete Rohstoffe

| | |
|---|---|
| Rohstoff R1 | PET (Polyethylenterephthalat von Invista, DE), SV-Wert 790, Carboxylendgruppengehalt 22 mmol/kg, Diethylenglykolgehalt 0,75 Gew.-% |
| Masterbatch MB1 | 20 Gew.-% $TiO_2$ (Hombitan LW-SU von Sachtleben, DE) und 80 Gew.-% PET; SV-Wert 790; DEG-Gehalt 1 Gew.-%, Carboxyl-endgruppengehalt 42 mmol/kg (Zugabe $TiO_2$ durch Einarbeitung in einem Zweischneckenextruder) |

Folienherstellung:

Thermoplast-Chips (MB1 sowie R1) wurden gemäß den in den Beispielen angegebenen Verhältnissen gemischt und bei 278 °C in einem Zweischneckenextruder (JapanSteelWorks) extrudiert. Die Dosierung der Hydrolysestabilisatoren erfolgte direkt in den Extrudereinzug mittels einer Pumpe. Das geschmolzene Polymer wurde aus einer Düse über eine Abzugswalze abgezogen. Der Film wurde um den Faktor 3,4 in Maschinenrichtung bei 116 °C gestreckt und in einem Rahmen bei 110 °C eine Querstreckung um den Faktor 3,3 durchgeführt. Anschließend wurde die Folie bei 225 °C thermofixiert und in Querrichtung um 6 % bei Temperaturen von 200 bis 180 °C relaxiert. Die Endfoliendicke betrug 50 $\mu$m.

Die Eigenschaften der hergestellten Folien sind der nachstehenden Tabelle zu entnehmen:

**Tabelle**

| | | Beispiel 1 | Vergleichsbeispiel 1 |
|---|---|---|---|
| R1 | Gew.-% | 60 | 60,6 |
| MB1 | Gew.-% | 36 | 36 |
| HStab 1 | Gew.-% | 3,0 | 3,0 |
| HStab 2 | Gew.-% | 0,4 | 0,4 |
| Kettenverlängerer 1 | Gew.% | 0,6 | 0,0 |
| Foliendicke | µm | 50 | 50 |
| SV-Wert (nach Folienherstellung) | | 786 | 756 |
| SV Wert nach 96 h bei 110°C im Autoklav bei Wassersättigung | | 635 | 607 |
| E-Modul MD/TD | $N/mm^2$ | 4750/4670 | 4870/4730 |
| Schrumpf in MD/TD | % | 0,9/0,1 | 0,8/0,0 |
| Dichte | $g/cm^3$ | 1,41 | 1,42 |
| Transparenz nach ASTM D1003 / Transparenz bei 370 nm | % | 29/0,5 | 30/0,5 |
| Viskositätsausschläge während der Produktion in der Extrusion mit Abrissfolge | Produktionsdauer 24 h | keine | 7 |

**Patentansprüche**

1. Biaxial orientierte Polyesterfolie, welche 0,25 - 20 Gew.-% (bezogen auf das Gewicht der Folie) eines Hydrolysestabilisators auf Basis von epoxidierten Fettsäureestern und/oder epoxidierten Fettsäureglyceriden enthält sowie einen Kettenverlängerer.

2. Polyesterfolie nach Anspruch 1, bei der der Carboxylendgruppengehalt der eingesetzten Polyester bei > 3 mmol/kg liegt.

3. Polyesterfolie nach Anspruch 1 oder 2, wobei mehr als 80 Gew.-% der eingesetzten epoxidierten Fettsäureglyceride Glycerinester der Formel 1 sind,

Formel 1: $CH_2OR_1\text{-}CHOR_2\text{-}CH_2OR_3$

wobei die Reste $R_1$, $R_2$ und $R_3$ unabhängig voneinander die folgende Bedeutung haben:

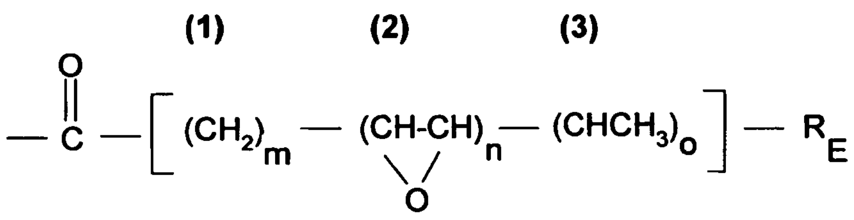

wobei
$R_E$= $CH_3$ oder H,
m = 1 - 40,
n = bis 10, und
o = 0 - 4
ist und wobei die Reihenfolge der einzelnen Methylen $(CH_2)$- (**1**), Epoxid (CHOCH)- (**2**) und $(CHCH_3)$- (**3**) Gruppen

beliebig ist
und wobei Reste $R_{1,2,3}$ mit m = 0 in Glycerinestermischungen zu weniger als 30 Gew.-% (bezogen auf das Gesamtgewicht der Glycerinester) enthalten sind.

**4.** Polyesterfolie nach einem der vorhergehenden Ansprüche, wobei mehr als 90 Gew.-% der eingesetzten epoxidierten Fettsäureester Ester der Formel 2 sind:

Formel 2: $R_4OR_5$

wobei $R_4$ folgende Bedeutung hat:

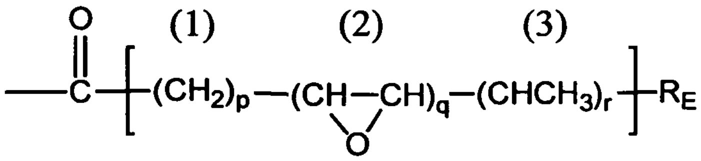

wobei
$R_E$= $CH_3$ oder H,
p = 1 - 40,
q = bis 10, und
r= 0-4
ist und wobei die Reihenfolge der einzelnen Methylen $(CH_2)$- (**1**), Epoxid (CHOCH)- (**2**) und $(CHCH_3)$- (**3**) Gruppen beliebig ist
und wobei der Rest $R_5$ durch die folgende Formel 3 beschrieben ist:

Formel 3: $-(CH_2)_5-R_6$

wobei
s = 0 - 50
$R_6$ = H, OH oder $C_tH_{(2t+1)}$ mit t = 3-10
O-$R_4$ , wobei $R_4$ dem $R_4$ -Rest aus Formel 2 entspricht.

**5.** Polyesterfolie nach einem der vorhergehenden Ansprüche, wobei die Säurezahl der eingesetzten Hydrolysestabilisatoren bei unter 10 mg KOH pro Gramm liegt (DIN EN ISO 3682).

**6.** Polyesterfolie nach einem der vorhergehenden Ansprüche, wobei die Hydrolysestabilisatoren einen Epoxidsauerstoffgehalt von mindestens 1 Gew.-% aufweisen.

**7.** Polyesterfolie nach einem der vorhergehenden Ansprüche, wobei das epoxidierte Fettsäureglycerid ausgewählt wird aus einem oder mehreren epoxidierten Ölen der Gruppe, bestehend aus epoxidiertem Sojabohnenöl, epoxidiertem Leinöl, epoxidiertem Rüböl, epoxidiertem Sonnenblumenöl und epoxidiertem Fischöl.

**8.** Polyesterfolie nach einem der vorhergehenden Ansprüche, wobei der epoxidierte Fettsäureester ausgewählt wird aus einem oder mehreren epoxidierten Fettsäureestern der Gruppe, bestehend aus dem 2-Ethylhexylester ungesättigter Fettsäuren oder Fettsäuregemische der Rüböl, Leinöl, Sojaöl oder Fischöl zugrunde liegenden Fettsäuren.

**9.** Polyesterfolie nach einem der vorhergehenden Ansprüche, wobei der Anteil der durch Formel 1 beschriebenen Fettsäureglyceride gemäß Anspruch 3 am Gesamthydrolysestabilisatoranteil > 50 Gew.-% beträgt.

**10.** Polyesterfolie nach einem der vorhergehenden Ansprüche, **dadurch gekennzeichnet, dass** der Kettenverlängerer ein difunktionelles oder polyfunktionelles Epoxid mit mindestens einer terminal am Ende der Molekülkette oder einer Seitenkette angeordneten Epoxidgruppe ist

**11.** Polyesterfolie nach Anspruch 10, **dadurch gekennzeichnet, dass** die terminale Epoxidgruppe beschrieben ist durch die Formel 4:

Formel 4 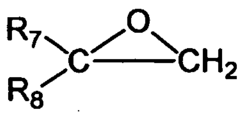

wobei
$R_7$ H oder ein beliebiger aliphatischer oder aromatischer organischer Rest ist und
$R_8$ ein beliebiger aliphatischer oder aromatischer organischer Rest ist.

**12.** Polyesterfolie nach einem der vorhergehenden Ansprüche, wobei der Kettenverlängerer ein Polymer der Formel 5 ist:

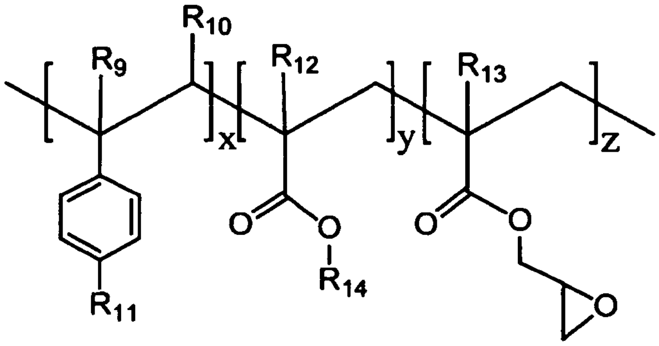

Formel 5

wobei
$R_9$ - $R_{13}$ unabhängig voneinander H oder ein C1-C12-Alkylrest sind,
$R_{14}$ eine C1-C12-Alkylgruppe ist,
x und y unabhängig voneinander eine Zahl zwischen 0 und 100 sind,
x + y größer als 0 sind und
z eine Zahl zwischen 2 und 100 ist.

**13.** Polyesterfolie nach Anspruch 12, wobei der Kettenverlängerer zu weniger als 2 Gew.-% und zu mindestens 0,1 Gew.-% (bezogen auf das Gesamtgewicht der Folie) in der Folie enthalten ist.

**14.** Verfahren zur Herstellung einer Polyesterfolie gemäß Anspruch 1, wobei die der Zusammensetzung der Folie entsprechenden Schmelzen durch eine Flachdüse extrudiert werden, die so erhaltene Folie zur Verfestigung auf einer oder mehreren Walze/n (Kühlwalze) als weitgehend amorphe Vorfolie abgezogen und abgeschreckt wird, die Folie anschließend erneut erhitzt und biaxial gestreckt (orientiert) und die biaxial gestreckte Folie thermofixiert und aufgerollt wird, **dadurch gekennzeichnet, dass** sie 0,25 - 20 Gew.-% (bezogen auf das Gewicht der Folie) eines Hydrolysestabilisators auf Basis von epoxidierten Fettsäureestern und/oder epoxidierten Fettsäureglyceriden enthält sowie einen Kettenverlängerer.

**15.** Verwendung einer Polyesterfolie nach Anspruch 1 in Außenanwendungen, als Flachbandkabel, als Rückseitenlaminat von Solarmodulen und in Elektroisolieranwendungen.

## Claims

**1.** A biaxially oriented polyester film which contains 0.25-20 % by weight (based on the weight of the film) of a hydrolysis stabilizer based on epoxidized fatty acid esters and/or epoxidized fatty acid glycerides, and a chain extender.

**2.** The polyester film as claimed in claim 1, in which the carboxyl end group content of the polyesters used is > 3 mmol/kg.

**3.** The polyester film as claimed in claim 1 or 2, wherein more than 80 % by weight of the epoxidized fatty acid glycerides used are glyceryl esters of the formula 1,

formula 1: $CH_2OR_1\text{-}CHOR_2\text{-}CH_2OR_3$

where the $R_1$, $R_2$ and $R_3$ radicals are each independently defined as follows:

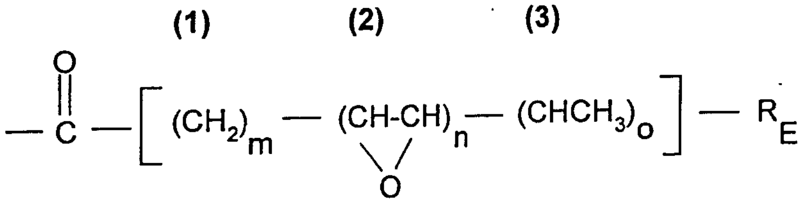

where
$R_E = CH_3$ or H,
m = 1-40,
n = up to 10, and
o = 0-4 and where the sequence of the individual methylene ($CH_2$) - (1), epoxy (CHOCH)- (2) and ($CHCH_3$) - (3) groups is as desired
and where $R_{1,2,3}$ radicals where m = 0 are present in glyceryl ester mixtures to an extent of less than 30 % by weight (based on the total weight of the glyceryl esters).

**4.** The polyester film as claimed in any of the preceding claims, wherein more than 90 % by weight of the epoxidized fatty acid esters used are esters of the formula 2:

formula 2: $R_4OR_5$

where $R_4$ is defined as follows:

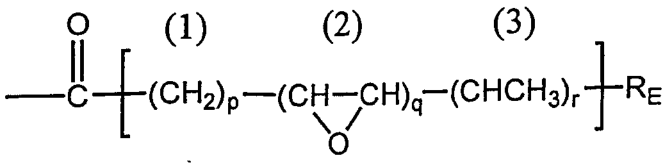

where
$R_E = CH_3$ or H,
p = 1-40,
q = up to 10, and
r = 0-4
and where the sequence of the individual methylene ($CH_2$)- (**1**), epoxy (CHOCH)- (**2**) and ($CHCH_3$) - (**3**) groups is as desired
and where the $R_5$ radical is described by the following formula 3:

formula 3: $-(CH_2)_s\text{-}R_6$

where
s = 0-50
$R_6$ = H, OH or $C_tH_{(2t+1)}$ where t = 3-10 O-$R_4$, where $R_4$ corresponds to the $R_4$ radical from formula 2.

**5.** The polyester film as claimed in any of the preceding claims, wherein the acid number of the hydrolysis stabilizers used is less than 10 mg KOH per gram (DIN EN ISO 3682).

**6.** The polyester film as claimed in any of the preceding claims, wherein the hydrolysis stabilizers have an epoxy oxygen content of at least 1 % by weight.

**7.** The polyester film as claimed in any of the preceding claims, wherein the epoxidized fatty acid glyceride is selected

from one or more epoxidized oils from the group consisting of epoxidized soybean oil, epoxidized linseed oil, epoxidized colza oil, epoxidized sunflower oil and epoxidized fish oil.

**8.** The polyester film as claimed in any of the preceding claims, wherein the epoxidized fatty acid ester is selected from one or more epoxidized fatty acid esters from the group consisting of the 2-ethylhexyl ester of unsaturated fatty acids or fatty acid mixtures of the fatty acids forming the basis of colza oil, linseed oil, soybean oil or fish oil.

**9.** The polyester film as claimed in any of the preceding claims, wherein the proportion of the fatty acid glycerides described by formula 1 according to claim 3 in the overall hydrolysis stabilizer content is > 50 % by weight.

**10.** The polyester film as claimed in any of the preceding claims, wherein the chain extender is a difunctional or polyfunctional epoxide with at least one epoxy group arranged terminally at the end of the molecule chain or of a side chain.

**11.** The polyester film as claimed in claim 10, wherein the terminal epoxy group is described by the formula 4:

formula 4

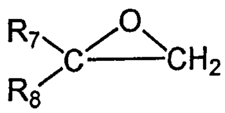

where
$R_7$ is H or any aliphatic or aromatic organic radical and
$R_8$ is any aliphatic or aromatic organic radical.

**12.** The polyester film as claimed in any of the preceding claims, wherein the chain extender is a polymer of the formula 5:

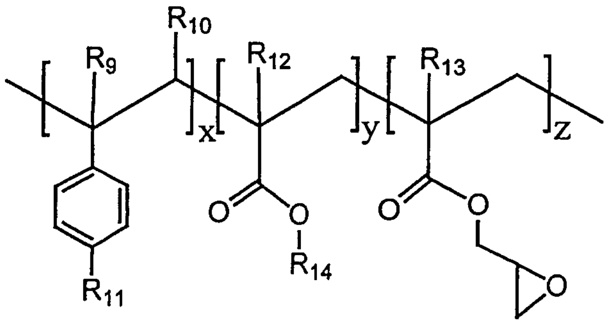

formula 5

where
$R_9$-$R_{13}$ are each independently H or a C1-C12-alkyl radical,
$R_{14}$ is a C1-C12-alkyl group,
x and y are each independently from 0 to 100,
x + y is greater than 0 and
z is from 2 to 100.

**13.** The polyester film as claimed in claim 12, wherein the chain extender is present in the film to an extent of less than 2 % by weight and to an extent of at least 0.1 % by weight (based on the total weight of the film).

**14.** A process for producing a polyester film as claimed in claim 1, wherein the melts corresponding to the composition of the film are extruded through a flat die, the film thus obtained is consolidated by drawing it off and quenching it on one or more roll(s) (chill rolls)
as substantially amorphous preliminary film, the film is then reheated and biaxially stretched (oriented) and the biaxially stretched film is heatset and rolled up, wherein it contains 0.25-20 % by weight (based on the weight of the film) of a hydrolysis stabilizer based on epoxidized fatty acid esters and/or epoxidized fatty acid glycerides, and a chain extender.

**15.** The use of a polyester film as claimed in claim 1 in outdoor applications, as a ribbon cable, as a backside laminate of solar modules and in electrical insulation applications.

## Revendications

**1.** Feuille de polyester orientée biaxialement qui contient 0,25 à 20 % en poids (par rapport au poids de la feuille) d'un stabilisant contre l'hydrolyse à base d'esters d'acide gras époxydés et/ou de glycérides d'acide gras époxydés, ainsi qu'un agent d'allongement de chaîne.

**2.** Feuille de polyester selon la revendication 1, dans laquelle la teneur en groupements carboxyle terminaux des polyesters utilisés est > 3 mmoles/kg.

**3.** Feuille de polyester selon la revendication 1 ou 2, dans laquelle plus de 80 % en poids des glycérides d'acide gras époxydés utilisés sont des esters de glycérol de formule 1, Formule 1 : $CH_2OR_1$-$CHOR_2$-$CH_2OR_3$ dans laquelle les radicaux $R_1$, $R_2$ et $R_3$ ont, indépendamment
l'un de l'autre, la signification suivante :

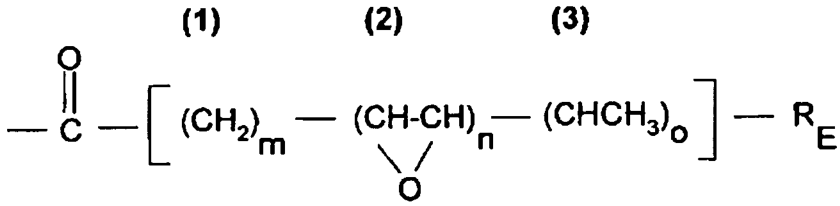

dans laquelle
$R_E$ représente $CH_3$ ou H,
m vaut 1 à 40,
n vaut jusqu'à 10, et
o vaut 0 à 4
et dans laquelle l'ordre des groupements individuels méthylène ($CH_2$)- (1), époxyde (CHOCH)- (2) et ($CHCH_3$)-(3) est quelconque
et dans laquelle les radicaux $R_{1,2,3}$ avec m = 0 dans des mélanges d'esters de glycérol sont contenus en quantité inférieure à 30 % en poids (par rapport au poids total des esters de glycérol).

**4.** Feuille de polyester selon l'une quelconque des revendications précédentes, dans laquelle plus de 90 % en poids des esters d'acide gras époxydés utilisés sont des esters de formule 2 :

Formule 2 : $R_4OR_5$

dans laquelle $R_4$ a la signification suivante :

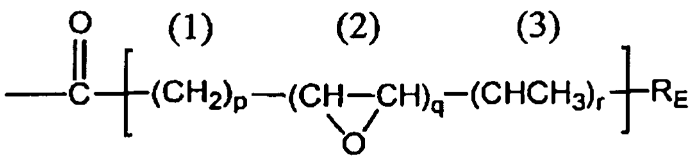

dans laquelle
$R_E$ représente $CH_3$ ou H,
p vaut 1 à 40,
q vaut jusqu'à 10, et
r vaut 0 à 4
et dans laquelle l'ordre des groupements individuels méthylène ($CH_2$)- (1), époxyde (CHOCH)- (2) et ($CHCH_3$)-(3)

est quelconque et dans laquelle le radical $R_5$ est décrit par la formule 3 suivante :

Formule 3 : $-(CH_2)_s-R_6$

dans laquelle
s vaut 0 à 50
$R_6$ représente H, OH ou $C_tH_{(2t+1)}$ avec t = 3 à 10
$O-R_4$, où $R_4$ correspond au radical $R_4$ tiré de la formule 2.

**5.** Feuille de polyester selon l'une quelconque des revendications précédentes, dans laquelle l'indice d'acidité des stabilisants contre l'hydrolyse utilisés est inférieur à 10 mg de KOH par gramme (norme DIN EN ISO 3682).

**6.** Feuille de polyester selon l'une quelconque des revendications précédentes, dans laquelle les stabilisants contre l'hydrolyse présentent une teneur en oxygène d'époxyde d'au moins 1 % en poids.

**7.** Feuille de polyester selon l'une quelconque des revendications précédentes, dans laquelle le glycéride d'acide gras époxydé est choisi parmi une ou plusieurs huiles époxydées choisies dans le groupe constitué de l'huile de soja époxydée, de l'huile de lin époxydée, de l'huile de navette époxydée, de l' huile de tournesol époxydée et de l'huile de poisson époxydée.

**8.** Feuille de polyester selon l'une quelconque des revendications précédentes, dans laquelle l'ester d'acide gras époxydé est choisi parmi un ou plusieurs esters d'acide gras époxydés du groupe constitué de l'ester 2-éthylhexylique d'acides gras insaturés ou de mélanges d'acides gras à la base de l'huile de navette, de l'huile de lin, de l'huile de soja ou de l'huile de poisson.

**9.** Feuille de polyester selon l'une quelconque des revendications précédentes, dans laquelle la proportion des glycérides d'acide gras décrits par la formule 1 selon la revendication 3 sur la proportion totale des stabilisants contre l'hydrolyse est > 50 % en poids.

**10.** Feuille de polyester selon l'une quelconque des revendications précédentes, **caractérisée en ce que** l'agent d'allongement de chaîne est un époxyde difonctionnel ou polyfonctionnel ayant au moins un groupement époxyde disposé en position terminale à l'extrémité de la chaîne moléculaire ou à l'extrémité d'une chaîne latérale.

**11.** Feuille de polyester selon la revendication 10, **caractérisée en ce que** le groupement époxyde terminal est décrit par la formule 4 :

Formule 4

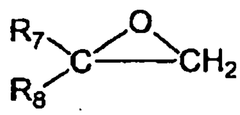

dans laquelle

$R_7$ représente H ou un radical organique aliphatique ou aromatique quelconque, et
$R_8$ est un radical organique aliphatique ou aromatique quelconque.

**12.** Feuille de polyester selon l'une quelconque des revendications précédentes, dans laquelle l'agent d'allongement de chaîne est un polymère de formule 5 :

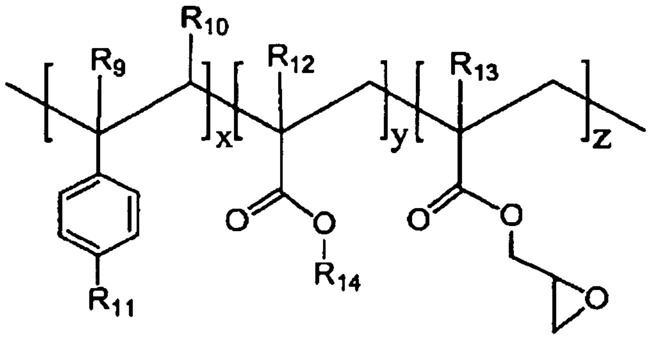

Formule 5

dans laquelle

$R_9$ à $R_{13}$ représentent, indépendamment l'un de l'autre, H ou un radical alkyle en $C_1$-$C_{12}$,
$R_{14}$ est un groupement alkyle en $C_1$-$C_{12}$,
x et y sont indépendamment l'un de l'autre un chiffre compris entre 0 et 100,
x + y est supérieur à 0 et
z est un nombre compris entre 2 et 100.

**13.** Feuille de polyester selon la revendication 12, dans laquelle l'agent d'allongement de chaîne est contenu dans la feuille en quantité inférieure à 2 % en poids et d'au moins 0,1 % en poids (par rapport au poids total de la feuille).

**14.** Procédé de fabrication d'une feuille de polyester selon la revendication 1, dans lequel les masses fondues correspondant à la composition de la feuille sont extrudées à travers une filière plate, la feuille ainsi obtenue est extraite et brusquement refroidie à des fins de solidification sur un ou plusieurs cylindre(s) (cylindre de refroidissement) pour donner une première feuille largement amorphe, la feuille est ensuite à nouveau chauffée et étirée (orientée) biaxialement et la feuille étirée biaxialement est soumise à une thermofixation et enroulée, **caractérisé en ce qu'**elle contient 0,25 à 20 % en poids (par rapport au poids de la feuille) d'un stabilisant contre l'hydrolyse à base d'esters d'acides gras époxydés et/ou de glycérides d'acide gras époxydés, ainsi qu'un agent d'allongement de chaîne.

**15.** Utilisation d'une feuille de polyester selon la revendication 1 dans des applications en extérieur, comme câble en ruban plat, comme stratifié en plan arrière de modules solaires et dans des applications d'électroisolation.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 5885709 A
- EP 0838500 A
- CH 621135 A
- EP 0292251 A
- US 3657191 A
- EP 1634914 A
- EP 1842871 A
- EP 1054031 A
- US 6984694 A
- US 3981737 A
- EP 0861299 A
- FR 2812299
- EP 0738749 A
- US 3432591 A

### In der Beschreibung aufgeführte Nicht-Patentliteratur

- Römpp Chemie Lexikon. Georg Thieme Verlag
- **Gächter Müller.** Kunststoffadditive. Carl Hanser-Verlag
- **r. Hans Zweifel.** Plastics Additives Handbook. Carl Hanser-Verlag